# EUROPÄISCHE PATENTSCHRIFT

(11) **EP 3 215 717 B1**
(45) Veröffentlichungstag und Bekanntmachung des Hinweises auf die Patenterteilung: **17.10.2018**
(21) Anmeldenummer: 15747149.1
(22) Anmeldetag: 04.08.2015
(51) Int. Cl.: F01L 1/053, F01L 1/344, F01L 13/00, F01L 1/047

(54) **NOCKENWELLE MIT EINEM AXIAL GEFÜHRTEN SCHIEBEELEMENT**
CAMSHAFT HAVING AN AXIALLY GUIDED SLIDING ELEMENT
ARBRE À CAMES COMPORTANT UN ÉLÉMENT COULISSANT GUIDÉ AXIALEMENT

(30) Priorität: 07.11.2014 DE 102014116252
(43) Veröffentlichungstag der Anmeldung: 13.09.2017
(73) Patentinhaber: ThyssenKrupp Presta TecCenter AG, 9492 Eschen (LI)
(72) Erfinder: JUNGE, Volker, 38855 Wernigerode (DE)
(74) Vertreter: thyssenkrupp Intellectual Property GmbH
(86) Internationale Anmeldenummer: PCT/EP2015/067880
(87) Internationale Veröffentlichungsnummer: WO 2016/071019

(56) Entgegenhaltungen:
- WO-A1-2010/142408
- DE-A1-102011 001 659
- DE-A1-102011 052 912
- DE-A1-102012 103 581

## Beschreibung

Die vorliegende Erfindung betrifft eine Nockenwelle mit einer Grundwelle, auf der wenigstens ein Schiebeelement entlang einer Wellenachse axial verschieblich aufgenommen ist, wobei die Grundwelle zur Drehmomentübertragung zwischen der Grundwelle und dem Schiebeelement wenigstens einen Außenzahn aufweist, der in eine in einem Durchgang des Schiebeelementes eingebrachte Zahngegengeometrie eingreift, wobei das Schiebeelement an seinen axialen Endseiten einen jeweiligen Lagerbund aufweist, der mit der Grundwelle eine radiale Stützlagerung des Schiebeelementes auf der Grundwelle bildet.

### STAND DER TECHNIK

Aus der DE 10 2011 086 161 A1 ist eine Nockenwelle mit einer Grundwelle bekannt, und auf der Grundwelle ist ein Schiebeelement entlang der Wellenachse der Nockenwelle axial verschieblich aufgenommen. Die Grundwelle weist eine Außenlängsverzahnung mit einer Vielzahl von Außenzähnen auf, und die Außenzähne greifen in eine Zahngegengeometrie ein, die in einem Durchgang im Schiebeelement eingebracht ist. Dadurch ist das Schiebeelement auf der Grundwelle in Wellenachsenrichtung axial verschieblich, jedoch kann das Schiebeelement auf der Grundwelle nicht verdreht werden, so dass Drehmomente von der Grundwelle auf das Schiebeelement übertragen werden können.
Bei der Aufnahme von Schiebeelementen auf einer mit Außenzähnen versehenen Grundwelle ergibt sich grundsätzlich das Problem einer möglichst spielfreien Führung des Schiebeelementes. Das Schiebeelement muss, um einen störungsfreien, dauerhaften Abgriff einer Hubinformation von einer Nockenlaufbahn des Schiebeelementes auf ein Abgriffselement zu ermöglichen, möglichst ohne radiales Spiel auf der Grundwelle geführt sein. Eine spielminimale Führung des Schiebeelementes auf der Grundwelle führt zu einer Minimierung der Desaxierung des Schiebeelementes auf der Grundwelle, wobei es wünschenswert ist, die Desaxierung möglichst klein auszuführen.

Um eine Führung des Schiebeelementes auf der Grundwelle von der Verzahnung der Außenzähne der Grundwelle mit der Innenverzahnung im Schiebeelement zur Bildung der Zahngegengeometrie zu entkoppeln, schlägt die DE 10 2011 086 161 A1 vor, am Schiebeelement Lagerbünde vorzusehen, durch die das Schiebeelement zur Minimierung der Desaxierung auf der Grundwelle geführt ist. Die Lagerbünde am Schiebeelement laufen dabei gegen die Zahnköpfe der Außenzähne der Grundwelle an, wodurch jedoch ein frühzeitiger Verschleiß der Lagerbünde hervorgerufen werden kann. Würde man auf der Grundwelle Lagerstellen mit einer Zylinderform vorsehen, so könnte das Schiebeelement mit der Zahngegengeometrie nicht mehr montiert werden, da die Zahngegengeometrie im Durchgang des Schiebeelementes einen kleinsten Durchmesser aufweist, der kleiner wäre als der Zylinderabschnitt zur Führung des Schiebeelementes, der auf der Grundwelle ausgebildet ist.

### OFFENBARUNG DER ERFINDUNG

Aufgabe der Erfindung ist die Weiterbildung einer Nockenwelle mit einer minimierten Desaxierung eines axial verschieblichen Schiebeelementes auf der Grundwelle, wobei das Schiebeelement über Lagerbünde gegen die Grundwelle radial geführt werden soll.

Diese Aufgabe wird ausgehend von einer Nockenwelle gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schlägt zur Lösung der Aufgabe vor, dass die Grundwelle zur Bildung der Stützlagerung zylindrische Lagerabschnitte aufweist, wobei die Lagerabschnitte mit einem Durchmesser ausgeführt sind, der kleiner ist als ein in den Durchgang hineinragender Kopfdurchmesser der Zahngegengeometrie im Schiebeelement.

Durch die erfindungsgemäße Ausgestaltung der Stützlagerung des Schiebeelementes auf der Grundwelle entsteht der Vorteil, dass das Schiebeelement auf der Grundwelle einfach montiert werden kann, und die Lagerbünde der Stützlagerung laufen nicht gegen den wenigstens einen Zahnkopf des Außenzahns auf der Grundwelle an. Der Lagerabschnitt auf der Grundwelle kann vollumfänglich zylindrisch ausgeführt sein und der Durchmesser der Lagerabschnitte kann beispielsweise kleiner sein als oder übereinstimmen mit dem Zahnfußdurchmesser des wenigstens einen Außenzahns oder von mehreren Außenzähnen auf der Grundwelle. Abhängig vom Durchmesser der zylindrischen Lagerabschnitte der Grundwelle können auch die Lagerbünde mit dem im Wesentlichen gleichen Durchmesser ausgeführt werden, und der Durchmesser der Lagerbünde kann beispielsweise nur geringfügig größer sein als der Durchmesser des zylindrischen Lagerabschnittes, um mit einer üblichen Lagerluft ein Gleitlager zu bilden.

Die Zahngegengeometrie kann in Abhängigkeit der Ausgestaltung und der Anzahl des oder der Außenzähne verschiedenartig ausgeführt sein. Sind mehrere Außenzähne insbesondere vollumfänglich auf der Grundwelle vorhanden und bilden so eine Außenverzahnung, kann die Zahngegengeometrie als Innenverzahnung ausgeführt sein. Der Kopfdurchmesser der Zahngegengeometrie kann dann gebildet sein als Kopfkreisdurchmesser der Innenverzahnung, der den Durchmesser bildet, mit dem die Zahnköpfe in den Durchgang im Schiebeelement hineinragen. Bei beispielsweise nur vereinzelt vorgesehen Außenzähnen kann die Zahngegengeometrie alternativ auch durch einen hohlzylindrischen Abschnitt mit wenigstens einer in diesen eingebrachten Zahnkerbe gebildet sein, und in die Zahnkerbe oder in jede der Zahnkerben greift ein jeweiliger Außenzahn der Grundwelle ein. Der hohlzylindrische Abschnitt kann dabei einen Durchmesser aufweisen, der größer ist als der Durchmesser der Lagerbünde im Durchgang des Schiebeelementes, mit anderen Worten können die Lagerbünde des Schiebeelementes einen Lagerinnendurchmesser aufweisen, der kleiner ist als der Innendurchmesser des hohlzylindrischen Abschnittes. Dadurch werden zwei beabstandete zueinander angeordnete Lagerstellen zur Lagerung des Schiebeelementes auf der Grundwelle geschaffen, um eine definierte Führung des Schiebeelementes zu bilden.

Weiterhin können die zylindrischen Lagerabschnitte der Grundwelle einen Außendurchmesser aufweisen, der kleiner ist als der Innendurchmesser des hohlzylindrischen Abschnittes im Schiebeelement. Damit wird gewährleistet, dass das Schiebeelement auf der Grundwelle montiert werden kann, indem das Schiebeelement in Wellenachsenrichtung auf die Grundwelle aufgeschoben wird. Um ein Hinüberführen der Lagerbünde über die zylindrischen Lagerabschnitte zu ermöglichen, ohne dass der hohlzylindrische Abschnitt im Schiebeelement das axiale Verschieben des Schiebeelementes auf der Grundwelle verhindert, ist der Durchmesser des hohlzylindrischen Abschnittes im Schiebeelement größer zu wählen als der Durchmesser der zylindrischen Lagerabschnitte der Grundwelle.

Mit besonderem Vorteil können die Lagerbünde wenigstens eine Montagekerbe aufweisen, durch die ein Außenzahn der Grundwelle hindurch führbar ist, wenn das Schiebeelement auf die Grundwelle aufgeführt wird. Erst durch das Einbringen wenigstens einer Montagekerbe in den Lagerbund wird das Aufführen des Schiebeelementes auf die Grundwelle ermöglicht, so dass der auf der Grundwelle vorhandene wenigstens eine Außenzahn während des Aufschiebens des Schiebeelementes die Montagekerbe axial durchwandern kann. Die erfindungsgemäße Nockenwelle sollte daher wenigstens einen, beispielsweise aber eher zwei, drei oder vier Außenzähne aufweisen, so dass die Anzahl der Montagekerben in Abhängigkeit der Anzahl der Außenzähne begrenzt bleibt. Beispielsweise können auf dem Umfang gleich verteilt vier Außenzähne auf der Grundwelle aufgebracht sein, so dass im Lagerbund vier gleich verteilt angeordnete Montagekerben vorgesehen sind. Zur Lagerung des Schiebeelementes auf der Grundwelle weist der Lagerbund damit Unterbrechungen auf, wobei die axiale Führung des Schiebeelementes auf der Grundwelle über den Lagerbund, der anläuft gegen den zylindrischen Lagerabschnitt der Grundwelle, durch die Montagekerben nicht beeinträchtigt wird.

Mit besonderem Vorteil können die Zahnkerben im hohlzylindrischen Abschnitt des Schiebeelementes und die Montagekerben in den Lagerbünden des Schiebeelementes in Wellenachsenrichtung miteinander fluchten, so dass die Zahnkerben und die Montagekerben zueinander gleiche Umfangspositionen aufweisen.

Die Außenzähne auf der Grundwelle können in Wellenachsenrichtung gesehen kürzer ausgebildet sein als der Abstand der Lagerbünde des Schiebeelementes zueinander. Insbesondere können zwischen einem Lagerbund des Schiebeelementes und der Zahngegengeometrie, also dem hohlzylindrischen Abschnitt, wenigstens zwei Rastnuten im Durchgang des Schiebeelementes eingebracht sein, in die ein Rastelement einrastbar ist, das an der Grundwelle aufgenommen ist. Dadurch können definierte Axialpositionen des Schiebeelementes auf der Grundwelle geschaffen werden, wenn das Schiebeelement durch einen externen Aktuator in der Axialposition auf der Grundwelle verstellt wird. Das Rastelement kann beispielsweise durch eine Kugel gebildet sein, die durch eine Druckfeder in die Rastnuten gedrückt wird.

Aus fertigungstechnischen Gründen kann es besonders vorteilhaft sein, wenn der Außendurchmesser des Abschnittes der Grundwelle, in den der oder die Außenzähne angeordnet sind, und der Außendurchmesser der Lagerabschnitte mit gleichen Dimensionen ausgebildet sind. Daraus ergeben sich fertigungstechnische Vorteile, insbesondere wenn die Außenzähne nicht einteilig mit der Grundwelle ausgebildet sind, sondern beispielsweise nachträglich an dieser angeordnet werden, beispielsweise mittels Kraft und/oder Formschluss oder mittels einem Stoffschluss.

Schließlich kann das Schiebeelement ein Trägerrohr aufweisen, wobei die Lagerbünde an den axialen Endseiten des Trägerrohres ausgebildet sind. Alternativ besteht die Möglichkeit, die Lagerbünde an wenigstens einem auf dem Trägerrohr aufgenommenen Nockenelement vorzusehen, welches in Wellenachsenrichtung über dem Trägerrohr hinausragen kann und innenseitig kann das Nockenelement mit seinem überstehenden Abschnitt den Lagerbund bilden.

Gemäß einer abgewandelten Ausführungsform kann das Schiebeelement auch einteilig ausgebildet sein. Die Elemente des Schiebeelementes, wenigstens umfassend die Nockenelemente und beispielsweise das Verstellglied, können aus einem Stück gefertigt sein oder durch ein Fügeverfahren miteinander gefügt sein. Dabei kann ein Trägerrohr entfallen und die Zahngegengeometrie im Durchgang des Schiebeelementes kann in den einstückigen Körper eingebracht sein. Somit können auch die Lagerbünde im Durchgang des einstückigen Schiebeelementes ausgebildet sein.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine quergeschnittene Ansicht einer abschnittsweisen Nockenwelle mit einer erfindungsgemäß ausgeführten radialen Stützlagerung,
- Fig. 2: ein weiteres Ausführungsbeispiel einer Nockenwelle mit den Merkmalen der vorliegenden Erfindung,
- Fig. 2a: eine Schnittansicht entlang der Schnittlinie I - I gemäß Fig. 2,
- Fig. 2b: eine Schnittansicht entlang der Schnittlinie II - II gemäß Fig. 2 und
- Fig. 3: eine Querschnittsansicht der Nockenwelle gemäß Fig. 2 in einer um die Wellenachse gedrehten Schnittebene.

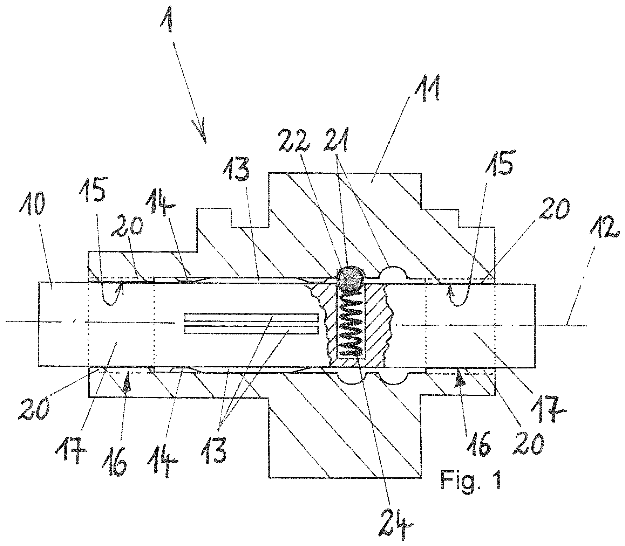

Figur 1 zeigt in einer Querschnittsansicht eine Nockenwelle 1 mit einer Grundwelle 10, die sich in einer Wellenachse 12 erstreckt, wobei auf der Grundwelle 10 ein Schiebeelement 11 aufgebracht ist, das lediglich schematisch vereinfacht dargestellt ist. Das Schiebeelement 11 weist Nockenlaufbahnen auf, über die eine Hubinformation an ein Ventil einer Brennkraftmaschine übertragen werden kann. Zur Ansteuerung des Ventils mit unterschiedlichen Nockenlaufbahnen kann das Schiebeelement 11 in Wellenachsenrichtung auf der Grundwelle 10 verschoben werden, und um diskrete axiale Positionen des Schiebeelementes 11 auf der Grundwelle 10 zu erzeugen, dient ein mit einer Druckfeder 24 vorgespanntes Rastelement 22, beispielhaft ausgeführt als eine Rastkugel, die in Rastnuten 21 einrasten kann, die in einem Durchgang im Schiebeelement 11 eingebracht sind.

Zur Drehmomentübertragung zwischen der Grundwelle 10 und dem Schiebeelement 11 weist die Grundwelle 10 beispielhaft gezeigte Außenzähne 13 auf, und die Grundwelle 10 weist gemäß dem gezeigten Ausführungsbeispiel acht Außenzähne 13 auf, die paarweise in 90°-Positionen auf dem Umfang der Grundwelle 10 aufgebracht sind. In Abwandlung der gezeigten Verteilung der Außenzähne 13 auf der Grundwelle 10 können diese auch 2-fach einzeln oder 2-fach paarweise auf 180° gegenüberliegenden Positionen auf oder an der Grundwelle 10 angeordnet sein, wobei beispielsweise auch eine 3-fache Anordnung mit einer Teilung von 120° gleich verteilt über dem Umfang vorteilhaft möglich ist.

Die Außenzähne 13 greifen in eine im Schiebeelement 11 eingebrachte Zahngegengeometrie 14 ein, so dass über die Flanken der Außenzähne 13 und der Zahngegengeometrie 14 in Umfangsrichtung eine Kraft übertragen werden kann. Damit kann zwischen der Grundwelle 10 und dem Schiebeelement 11 ein Drehmoment übertragen werden, so dass das Schiebeelement 11 auf der Grundwelle 10 nicht verdrehbar ist, jedoch ist das Schiebeelement 11 in Wellenachsenrichtung auf der Grundwelle 10 axial geführt.

Die Führung erfolgt über Lagerbünde 15, die axial gesehen angrenzend an die Außenseiten innenseitig im Schiebelement 11 eingebracht sind. Die Lagerbünde 15 laufen gegen Lagerabschnitte 17 an, die durch entsprechende zylindrische Abschnitte der Grundwelle 10 gebildet sind. Dabei sind die Lagerabschnitte 17 mit einem Durchmesser ausgeführt, der kleiner ist als der kleinste Durchmesser der Zahngegengeometrie 14 im Schiebeelement 11. Durch die erfindungsgemäß ausgestaltete Stützlagerung 16 entsteht der Vorteil, dass das Schiebeelement 11 auf die Grundwelle 10 in Wellenachsenrichtung aufgeschoben werden kann, und die Stützlagerung 16 mit den Lagerbünden 15, die im Wesentlichen zylindrisch ausgeführt sind und gegen zylindrische Lagerabschnitte 17 anlaufen, kann eine spielminimale, verschleißminimale Gleitlagerung zur radialen Führung des Schiebeelementes 11 auf der Grundwelle 10 gebildet werden.

Korrespondierend zu den Positionen der Außenzähne 13 auf der Grundwelle 10 können die Lagerbünde 15 mit Montagekerben 20 ausgeführt sein, die achsparallel in Axialrichtung verlaufen und mit der Umfangsposition der Außenzähne 13 korrespondieren. Wird das Schiebeelement 11 auf die Grundwelle 10 aufgeschoben, so können die Außenzähne 13 mit den Montagekerben 20 in den Lagerbünden 15 in Überdeckung gebracht werden, so dass trotz des größeren Außendurchmessers der Außenzähne 13 bezogen auf den Durchmesser der Lagerbünde 15 das Schiebeelement 11 auf der Grundwelle 10 montiert werden kann. Die mit den Montagekerben 20 als kleine Unterbrechungen im Wesentlichen hohlzylindrisch ausgeführten Lagerbünde 15 werden durch die eingebrachten Montagekerben 20 in ihrer Führungswirkung zur radialen Führung des Schiebeelementes 11 auf der Grundwelle 10 über die Lagerabschnitte 17 nicht nachhaltig beeinträchtigt.

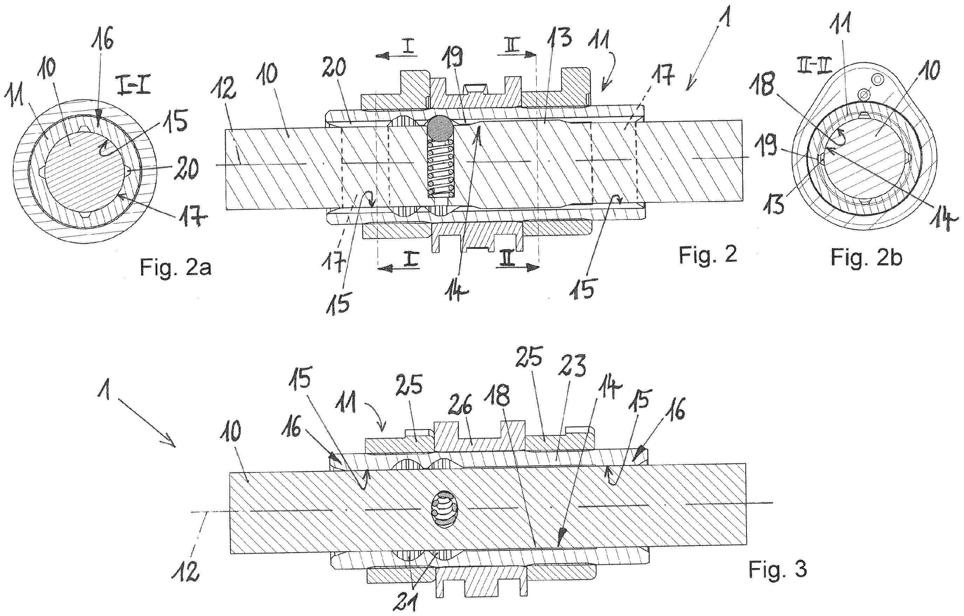

Figur 2 zeigt einen Querschnitt durch eine Nockenwelle 1 mit einer Grundwelle 10 und einem Schiebeelement 11, und das Schiebeelement 11 ist in Wellenachsenrichtung auf der Grundwelle 10 axial beweglich. Die Querschnittsdarstellung der Grundwelle 10 zeigt einen Übergang der Lagerabschnitte 17 in den Bereich der Grundwelle 10, in dem die Außenzähne 13 eingebracht sind, die sich in die Zahngegengeometrie 14 im Schiebeelement 11 hinein erstrecken. Die Zahngegengeometrie 14 umfasst dabei Zahnkerben 19, die in einem hohlzylindrischen Abschnitt eingebracht sind, der aufgrund der Schnittebene nicht dargestellt ist, und es wird verwiesen auf die Figur 3, in der der hohlzylindrische Abschnitt 18 gezeigt ist.

Gegen die Lagerabschnitte 17 laufen die Lagerbünde 15 des Schiebeelementes 11 an, und die Schnittansicht zeigt in den Lagerbünden eingebrachte Montagekerben 20, die mit der Umfangsposition der Außenzähne 13 korrespondieren, so dass das Schiebeelement 11 auf die Grundwelle 10 aufgeschoben werden kann.

Figur 2a zeigt eine Querschnittsansicht entlang der Schnittlinie I - I, wie in Figur 2 gezeigt. Die Ansicht zeigt die Grundwelle 10 im Bereich des Lagerabschnittes 17, weiterhin dargestellt sind vier auf dem Umfang gleich verteilte Montagekerben 20 im Lagerbund 15 des Schiebeelementes 11. Trotz der Montagekerben 20 wird eine Stützlagerung 16 zwischen dem Schiebeelement 11 und der Grundwelle 10 im Wesentlichen nach Art einer Gleitlagerung geschaffen, die eine spielminimale, belastbare Führung des Schiebeelementes 11 auf der Grundwelle 10 ermöglicht, ohne dass die Führung des Schiebeelementes 11 über die Verzahnung zwischen den Außenzähnen 13 und der Zahngegengeometrie 14 geführt werden muss, die lediglich nur noch zur Drehmomentübertragung dient. Damit wird eine besonders gute Rundlaufgenauigkeit des Schiebeelementes 11 auf der Grundwelle 10 erreicht.

Figur 2b zeigt eine Querschnittsansicht entlang der Schnittlinie II - II, wie in Figur 2 gezeigt. Die Grundwelle 10 ist in dem Bereich geschnitten dargestellt, in dem die Grundwelle 10 die Außenzähne 13 aufweist, und die Außenzähne 13 erstrecken sich in die Zahnkerben 19 hinein, die im hohlzylindrischen Abschnitt 18 des Schiebeelementes 11 eingebracht sind. Mit dem hohlzylindrischen Abschnitt 18 und den Zahnkerben 19 wird die Zahngegengeometrie 14 gebildet, und auf dem Umfang gleich verteilt sind vier Zahnkerben 19 vorgesehen, die mit ebenfalls vier Außenzähnen 13 korrespondieren. Die Umfangspositionen der Zahnkerben 19 stimmen dabei mit den Umfangspositionen der Montagekerben 20 in den Lagerbünden 15 überein, wie in Figur 2a gezeigt.

Figur 3 zeigt eine Querschnittsansicht der Nockenwelle 1 gemäß Figur 2 in einer um die Wellenachse 12 gedrehten Schnittebene. In dieser Ebene ist der hohlzylindrische Abschnitt 18 im Durchgang des Schiebeelementes 11 gezeigt, der seitlich übergeht in den Lagerbund 15 und in die Rastnuten 21, die im weiteren axialen Verlauf übergehen in den weiteren Lagerbund 15.

Das Schiebeelement 11 weist ein Trägerrohr 23 auf, auf dem Nockenelemente 25 und ein Verstellglied 26 zur axialen Verstellung des Schiebeelementes 11 aufgebracht sind. Die Lagerbünde 15 zur Bildung der Stützlagerung 16 sind im Trägerrohr 23 innenseitig eingebracht, und die Nockenelemente 25 und das Verstellglied 26 können jeweils oder gemeinsam auf der Außenseite des Trägerrohrs 23 aufgepresst sein.

Die Querschnittsansichten der Figuren 2 und 3 zeigen, dass die zylindrischen Lagerabschnitte 17 der Grundwelle 10 mit einem Durchmesser ausgeführt sind, der kleiner ist als der kleinste Durchmesser der Zahngegengeometrie 14 im Schiebeelement 11. Erst dadurch ist eine Montierbarkeit des Schiebeelementes 11 auf der Grundwelle 10 ermöglicht, während zugleich die Lagerabschnitte 17 zur radialen Führung des Schiebeelementes 11 zylindrisch ausgeführt sein können, während lediglich der Lagerbund 15 vereinzelt Montagekerben 20 aufweist, durch die die Außenzähne 13 laufen können, wenn das Schiebeelement 11 auf der Grundwelle 10 montiert wird. Durch lediglich auf dem Umfang verteilt einzeln vorgesehene Außenzähne 13 und damit zugeordnete Zahnkerben 19 kann eine verschleißminimale, tragfähige radiale Lagerung des Schiebeelementes 11 auf der Grundwelle 10 geschaffen werden, ohne dass die Lagerung auf den Zahnköpfen der Zahnaußengeometrie der Grundwelle 10 erfolgen muss.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste

- 1: Nockenwelle

- 10: Grundwelle
- 11: Schiebeelement
- 12: Wellenachse
- 13: Außenzahn
- 14: Zahngegengeometrie
- 15: Lagerbund
- 16: Stützlagerung
- 17: Lagerabschnitt
- 18: hohlzylindrischer Abschnitt
- 19: Zahnkerbe
- 20: Montagekerbe
- 21: Rastnut
- 22: Rastelement
- 23: Trägerrohr
- 24: Druckfeder
- 25: Nockenelement
- 26: Verstellglied

## Patentansprüche

1. Nockenwelle (1) mit einer Grundwelle (10), auf der wenigstens ein Schiebeelement (11) entlang einer Wellenachse (12) axial verschieblich aufgenommen ist, wobei die Grundwelle (10) zur Drehmomentübertragung zwischen der Grundwelle (10) und dem Schiebelement (11) wenigstens einen Außenzahn (13) aufweist, der in eine in einem Durchgang des Schiebeelementes (11) eingebrachte Zahngegengeometrie (14) eingreift, wobei das Schiebeelement (11) an seinen axialen Endseiten einen jeweiligen Lagerbund (15) aufweist, der mit der Grundwelle (10) eine radiale Stützlagerung (16) des Schiebeelementes (11) auf der Grundwelle (10) bildet, **dadurch gekennzeichnet, dass** die Grundwelle (10) zur Bildung der Stützlagerung (16) zylindrische Lagerabschnitte (17) aufweist, wobei die Lagerabschnitte (17) mit einem Durchmesser ausgeführt sind, der kleiner ist als ein in den Durchgang hineinragender Kopfdurchmesser der Zahngegengeometrie (14) im Schiebeelement (11).

2. Nockenwelle (1) nach Anspruch 1, **dadurch gekennzeichnet, dass** die Zahngegengeometrie (14) durch einen hohlzylindrischen Abschnitt (18) mit wenigstens einer in diesen eingebrachten Zahnkerbe (19) gebildet ist, und in die Zahnkerbe (19) oder in jede der Zahnkerben (19) greift ein Außenzahn (13) der Grundwelle (10) ein.

3. Nockenwelle (1) nach Anspruch 2, **dadurch gekennzeichnet, dass** die Lagerbünde (15) des Schiebeelementes (11) einen Lagerinnendurchmesser aufweisen, der kleiner ist als der Innendurchmesser des hohlzylindrischen Abschnittes (18).

4. Nockenwelle (1) nach Anspruch 2 oder 3, **dadurch gekennzeichnet, dass** die zylindrischen Lagerabschnitte (17) der Grundwelle (10) einen Außendurchmesser aufweisen, der kleiner ist als der Innendurchmesser des hohlzylindrischen Abschnittes (18) im Schiebeelement (11).

5. Nockenwelle (1) nach einem der vorgenannten Ansprüche, **dadurch gekennzeichnet, dass** der Lagerbund (15) wenigstens eine Montagekerbe (20) aufweist, durch die ein Außenzahn (13) der Grundwelle (10) hindurchführbar ist, wenn das Schiebeelement (11) auf die Grundwelle (10) aufgeführt wird.

6. Nockenwelle (1) nach Anspruch 5, **dadurch gekennzeichnet, dass** die Zahnkerbe (19) und die Montagekerbe (20) zueinander gleiche Umfangspositionen im Schiebeelement (11) aufweisen und in Wellenachsenrichtung miteinander fluchten.

7. Nockenwelle (1) nach einem der vorgenannten Ansprüche, **dadurch gekennzeichnet, dass** die Außenzähne (13) der Grundwelle (10) in Wellenachsenrichtung kürzer ausgebildet sind als der Abstand der Lagerbünde (15) des Schiebeelementes (11) zueinander.

8. Nockenwelle (1) nach einem der vorgenannten Ansprüche, **dadurch gekennzeichnet, dass** zwischen einem Lagerbund (15) und der Zahngegengeometrie (14) wenigstens zwei Rastnuten (21) im Durchgang des Schiebeelementes (11) eingebracht sind, in die ein Rastelement (22) einrastbar ist, das an der Grundwelle (10) aufgenommen ist.

9. Nockenwelle (1) nach einem der vorgenannten Ansprüche, **dadurch gekennzeichnet, dass** der Außendurchmesser des Abschnittes der Grundwelle (10), in dem die Außenzähne (13) angeordnet sind, und der Außendurchmesser der Lagerabschnitte (17) mit gleichen Dimensionen ausgebildet sind.

10. Nockenwelle (1) nach einem der vorgenannten Ansprüche, **dadurch gekennzeichnet, dass** das Schiebeelement (11) ein Trägerrohr (23) aufweist, wobei die Lagerbünde (15) an den axialen Endseiten des Trägerrohres (23) ausgebildet sind.

## Claims

1. Camshaft (1) with a basic shaft (10), on which at least one sliding element (11) is received in such a way as to be axially displaceable along a shaft axis (12), wherein the basic shaft (10) comprises at least one external tooth (13) for the transmission of torque between the basic shaft (10) and the sliding element (11), which external tooth (13) engages in a mating tooth geometry (14) formed in a passage of the sliding element (11), wherein the sliding element (11), on its axial end faces, comprises a respective bearing collar (15) which, with the basic shaft (10), forms a radial supporting bearing (16) of the sliding element (11) on the basic shaft (10),
**characterized in that** the basic shaft (10) comprises cylindrical bearing portions (17) for forming the supporting bearing (16), wherein the bearing portions (17) are configured with a diameter that is smaller than a tip diameter, which protrudes into the passage, of the mating tooth geometry (14) in the sliding element (11).

2. Camshaft (1) according to Claim 1, **characterized in that** the mating tooth geometry (14) is formed by a hollow cylindrical portion (18) with at least one tooth notch (19) introduced into the latter, and an external tooth (13) of the basic shaft (10) engages in the tooth notch (19) or in each of the tooth notches (19).

3. Camshaft (1) according to Claim 2, **characterized in that** the bearing collars (15) of the sliding element (11) comprise a bearing internal diameter that is smaller than the internal diameter of the hollow cylindrical portion (18).

4. Camshaft (1) according to Claim 2 or 3, **characterized in that** the cylindrical bearing portions (17) of the basic shaft (10) comprise an external diameter that is smaller than the internal diameter of the hollow cylindrical portion (18) in the sliding element (11).

5. Camshaft (1) according to one of the preceding claims, **characterized in that** the bearing collar (15) comprises at least one mounting notch (20) through which an external tooth (13) of the basic shaft (10) can be guided when the sliding element (11) is guided onto the basic shaft (10).

6. Camshaft (1) according to Claim 5, **characterized in that** the tooth notch (19) and the mounting notch (20) are at mutually identical circumferential positions in the sliding element (11) and are flush with each other in the direction of the shaft axis.

7. Camshaft (1) according to one of the preceding claims, **characterized in that** the external teeth (13) of the basic shaft (10) are shorter, in the direction of the shaft axis, than the distance of the bearing collars (15) of the sliding element (11) from each other.

8. Camshaft (1) according to one of the preceding claims, **characterized in that,** between a bearing collar (15) and the mating tooth geometry (14), at least two latch grooves (21) are introduced in the passage of the sliding element (11), and a latching element (22), which is received on the basic shaft (10), is able to latch into said latch grooves (21) .

9. Camshaft (1) according to one of the preceding claims, **characterized in that** the external diameter of the portion of the basic shaft (10) in which the external teeth (13) are arranged and the external diameter of the bearing portions (17) are configured with identical dimensions.

10. Camshaft (1) according to one of the preceding claims, **characterized in that** the sliding element (11) comprises a carrier tube (23), wherein the bearing collars (15) are formed on the axial end faces of the carrier tube (23).

## Revendications

1. Arbre à cames (1) comprenant un arbre de base (10) sur lequel est accueilli au moins un élément coulissant (11) en coulissement axial le long d'un axe d'arbre (12), l'arbre de base (10) possédant au moins une dent externe (13) servant à la transmission de couple entre l'arbre de base (10) et l'élément coulissant (11), laquelle vient en prise dans une géométrie complémentaire de dent (14) pratiquée dans un passage de l'élément coulissant (11), l'élément coulissant (11) possédant une collerette formant palier (15) respective à ses côtés d'extrémité axiaux qui, avec l'arbre de base (10), forme un palier support (16) radial de l'élément coulissant (11) sur l'arbre de base (10),
**caractérisé en ce que** l'arbre de base (10) possède des portions de palier (17) cylindriques pour former le palier support (16), les portions de palier (17) étant réalisées avec un diamètre qui est inférieur à un diamètre de tête de la géométrie complémentaire de dent (14) dans l'élément coulissant (11) qui fait saillie dans le passage.

2. Arbre à cames (1) selon la revendication 1, **caractérisé en ce que** la géométrie complémentaire de dent (14) est formée par une portion cylindrique creuse (18) dans laquelle est formée au moins une encoche de dent (19), et une dent externe (13) de l'arbre de base (10) vient en prise dans l'encoche de dent (19) ou dans chacune des encoches de dent (19).

3. Arbre à cames (1) selon la revendication 2, **caractérisé en ce que** les collerettes formant palier (15) de l'élément coulissant (11) possèdent un diamètre intérieur de palier qui est inférieur au diamètre intérieur de la portion cylindrique creuse (18).

4. Arbre à cames (1) selon la revendication 2 ou 3, **caractérisé en ce que** les portions de palier (17) cylindriques de l'arbre de base (10) possèdent un diamètre extérieur qui est inférieur au diamètre intérieur de la portion cylindrique creuse (18) dans l'élément coulissant (11).

5. Arbre à cames (1) selon l'une des revendications précédentes, **caractérisé en ce que** la collerette formant palier (15) possède au moins une encoche de montage (20) à travers laquelle peut passer une dent externe (13) de l'arbre de base (10) lorsque l'élément coulissant (11) est guidé sur l'arbre de base (10).

6. Arbre à cames (1) selon la revendication 5, **caractérisé en ce que** l'encoche de dent (19) et l'encoche de montage (20) possèdent les mêmes positions circonférentielles dans l'élément coulissant (11) l'une par rapport à l'autre et sont alignées l'une sur l'autre dans la direction de l'axe de l'arbre.

7. Arbre à cames (1) selon l'une des revendications précédentes, **caractérisé en ce que** les dents externes (13) de l'arbre de base (10) sont réalisées plus courtes dans le sens de l'axe de l'arbre que l'écart mutuel des collerettes formant palier (15) de l'élément coulissant (11) .

8. Arbre à cames (1) selon l'une des revendications précédentes, **caractérisé en ce qu'**au moins deux rainures d'encliquetage (21) sont pratiquées dans le passage de l'élément coulissant (11) entre une collerette formant palier (15) et la géométrie complémentaire de dent (14), dans lesquelles peut être encliqueté un élément d'encliquetage (22) qui est accueilli sur l'arbre de base (10) .

9. Arbre à cames (1) selon l'une des revendications précédentes, **caractérisé en ce que** le diamètre extérieur de la portion de l'arbre de base (10) dans laquelle sont disposées les dents externes (13) et le diamètre extérieur des portions de palier (17) sont réalisés avec les mêmes dimensions.

10. Arbre à cames (1) selon l'une des revendications précédentes, **caractérisé en ce que** l'élément coulissant (11) possède un tube porteur (23), les collerettes formant palier (15) étant formées aux côtés d'extrémité axiaux du tube porteur (23).
